# EUROPÄISCHE PATENTSCHRIFT

(11) **EP 3 767 189 B1**
(45) Veröffentlichungstag und Bekanntmachung des Hinweises auf die Patenterteilung: **14.06.2023**
(21) Anmeldenummer: 20185698.6
(22) Anmeldetag: 14.07.2020
(51) Int. Cl.: F24F 3/16, F24F 13/28, F24F 13/32, F24F 3/167

(54) **DECKENMODUL ZUM AUFBAU EINES REINRAUMS**
CEILING MODULE FOR BUILDING A CLEAN ROOM
MODULE DE PLAFOND POUR LA CONSTRUCTION D'UNE SALLE BLANCHE

(30) Priorität: 16.07.2019 US 201916512451
(43) Veröffentlichungstag der Anmeldung: 20.01.2021
(73) Patentinhaber: Exyte Management GmbH, 70376 Stuttgart (DE)
(72) Erfinder: Mussati, Luca, 50667 Köln (DE); Wenz, Martin Gerhard, 74321 Bietigheim-Bissingen (DE); Kappeler, Stefan, 4106 Therwil (CH); Hofheinz, Stephan, 70839 Gerlingen (DE); Ellinger, Sebastian, 72766 Reutlingen (DE); Rod, Igor, Wayland, 01778 (US)
(74) Vertreter: DREISS Patentanwälte PartG mbB

(56) Entgegenhaltungen:
- DE-A1-102009 024 232
- JP-A- H07 239 093
- KR-A- 20190 015 798
- US-A- 5 833 727

## Beschreibung

Die Erfindung betrifft ein Deckenmodul zum Aufbau eines Reinraums sowie Systeme mit einem solchen Deckenmodul.

Reinräume finden in einer Vielzahl von Anwendungsbereichen Verwendung, z.B. in der Halbleiterfertigung oder bei der Herstellung von pharmazeutischen Produkten, und sind üblicherweise aus mehreren Grundkomponenten aufgebaut: einer äußeren Rahmenstruktur (bspw. einem Stahlskelett oder einer Gebäudewand); mehreren luft- und partikeldichten Reinraumwänden, welche den eigentlichen Arbeitsbereich des Reinraums, das sog. Reinraumplenum, eingrenzen; und Reinraumtechnik zur Luftfilterung und ggf. Luftumwälzung in dem Reinraumplenum. Die Reinraumtechnik ist üblicherweise über einer von der äußeren Rahmenstruktur abgehängten Reinraum-Decke angeordnet und umfasst in der Regel Filterelemente, HVAC-Einheiten ("Heating, Ventilating and Air Conditioning", also Einheiten mit Heizung, Lüftung und Klimatechnik), Fluidleitungen, etc.

Der Aufbau von Reinräumen, insbesondere von komplex ausgebildeten Reinraumanlagen, ist zeitaufwendig, da die einzelnen Komponenten an die spezifischen Anforderungen individuell angepasst werden müssen und dann an einem Bestimmungsort zu einem luft- und partikeldichten Reinraum zusammengefügt werden müssen. Insbesondere der Aufbau der Reinraum-Decke und die Montage der Reinraumtechnik oberhalb der Decke erfordert einen vergleichsweise hohen Montageaufwand.

Bekannt sind containerartige Reinraummodule, welche als vorgefertigte, in sich funktionsfähige Einheiten bereitgestellt werden und dann an einem Einsatzort lediglich mit entsprechenden Versorgungsleitungen verbunden werden müssen. Aus der US2012/0077429A1 ist beispielsweise ein mobiles Reinraummodul bekannt, bei dem ein See-Container eine äußere Rahmenstruktur des Reinraummoduls bildet. Ein Reinraumplenum ist im Innenraum des Containers gebildet und die erforderliche Reinraumtechnik ist auf dem Dach des Containers angeordnet. Derartige Systeme sind schnell einsatzfähig, jedoch in ihren Gestaltungsmöglichkeiten begrenzt. Ferner ist aufgrund der Größe ein Transport solcher vorgefertigter Reinraummodule aufwändig.

Deckenmodule sind beispielsweise aus US 5 833 727 A, KR 2019 0015798 A, DE 10 2009 024232 A1 und JP H07 239093 A bekannt.

Es ist ferner bekannt, vorgefertigte Reinraum-Wandelemente bereitzustellen, welche dann an einem Bestimmungsort mit entsprechenden Deckenteilen zu einem Reinraum zusammengesetzt werden können. Aus der US5,029,518 ist beispielsweise ein modulares System bekannt, bei dem vorgefertigte Profilelemente zur Bildung von Reinraum-Seitenwänden bedarfsgerecht zusammengesteckt werden können.

Eine Deckenstruktur ist dabei aus mehreren Deckenträgern und einer von den Deckenträgern abgehängten Reinraumdecke gebildet. Ein zwischen Deckenträgern und Reinraumdecke ausgebildetes Deckenplenum dient als Luftplenum zum Ansaugen von Abluft durch eine HVAC-Einheit. Dies macht es erforderlich, das gesamte Deckenplenum im Zuge der Montage luftdicht zu verschließen. Die HVAC-Einheit ist über eine Luftzuführeinrichtung mit in der Reinraumdecke angeordneten Filterelementen verbunden. Eine solche Ausgestaltung ermöglicht grundsätzlich einen modularen Aufbau eines Reinraums. Jedoch gestalten sich auch hier insbesondere eine Montage der Deckenstruktur mit abgehängter Decke und luftdichtem Deckenplenum sowie eine Montage der Luftzuführeinrichtung aufwändig.

Die vorliegende Erfindung beschäftigt sich mit der Aufgabe, den Aufbau eines Reinraums zu vereinfachen. Insbesondere sollen auch komplexe, individuell gestaltete Reinräume auf einfache und kostengünstige Weise aufgebaut werden können.

Diese Aufgabe wird durch ein Deckenmodul mit den Merkmalen des Anspruchs 1 gelöst. Bevorzugte Ausführungen sind in den Unteransprüchen definiert.

Das Deckenmodul dient zum Aufbau einer Reinraumzelle, welche ihrerseits Teil eines größeren Reinraums mit mehreren Zellen sein kann. Das Deckenmodul umfasst einen Modulträger zur Anordnung und Verbindung mit einem, insbesondere gebäudeseitigen, Tragwerk. Bei dem Tragwerk kann es sich beispielsweise um auf einem Fundament angeordnete Pfeiler oder an einer Gehäusewand befestigte Träger handeln.

Das Deckenmodul umfasst ferner eine Technikeinrichtung, welche grundsätzlich wesentliche Komponenten der Reinraumtechnik umfassen kann. Insbesondere umfasst die Technikeinrichtung wenigstens eine Filter-Einheit. Die Filter-Einheit umfasst vorzugsweise wenigstens eine Filtereinrichtung zum Filtern von Luft und eine Luftfördereinrichtung bzw. Lüftereinrichtung zum Erzeugen einer Luftströmung, insbesondere einer Luftströmung durch die wenigstens eine Filtereinrichtung. Derartig ausgestaltete Filter-Einheiten werden auch als Filter-Ventilations-Einheiten bezeichnet und sind aus dem Stand der Technik, beispielsweise aus der DE 10 2005 062 523 A1, bekannt. Es ist jedoch auch denkbar, dass die Filter-Einheit als reine Filtrationseinrichtung ausgebildet ist und insofern keine eigene Luftfördereinrichtung umfasst. Die Filtereinrichtung ist insbesondere zum Herausfiltern von partikulären Verunreinigungen (Staub) ausgebildet.

Das Deckenmodul umfasst ferner einen Deckenträger, welcher von dem Modulträger derart beabstandet ist, dass ein Technikraum zwischen dem Deckenträger und dem Modulträger gebildet ist. Dabei sind der Modulträger, der Deckenträger und die Technikeinrichtung zu einer vormontierten Baueinheit verbunden und bilden insofern ein Modul. Die Technikeinrichtung ist innerhalb des Technikraumes angeordnet ist. Insofern ist die Technikeinrichtung - umfassend die wenigstens eine Filter-Einheit - zwischen Modulträger und Deckenträger angeordnet.

Bei bestimmungsgemäßem Einbau des Deckenmoduls an dem Tragwerk (Montagezustand) ist der Deckenträger unterhalb des Modulträgers angeordnet und von der Unterseite des Modulträgers beabstandet. Vorzugsweise ist der Deckenträger über Traganker (z.B. in der Art von Gewindestangen oder Tragseilen) an dem Modulträger angehängt. Insbesondere sind Deckenträger und Modulträger jeweils Konstruktionen, die sich flächig in einer Ebene erstrecken. Die von dem Deckenträger aufgespannte Ebene ist vorzugsweise parallel zu der von dem Modulträger aufgespannten Ebene ausgerichtet. Insbesondere sind Deckenträger und Modulträger jeweils Rahmenkonstruktionen.

Der Deckenträger bildet im Montagezustand des Deckenmoduls das Gerüst für eine Reinraum-Decke, er ist also Teil einer das eigentliche Reinraumplenum definierenden Struktur. Insbesondere kann der Deckenträger im Montagezustand mit Reinraum-Seitenwandelementen verbunden werden, welche das Reinraumplenum seitlich begrenzen.

Die wenigstens eine Filter-Einheit dient dazu, das Reinraumplenum mit gefilterter Luft zu versorgen. Vorzugsweise ist die wenigstens eine Filter-Einheit in einem Montagezustand des Deckenmoduls mit einer HVAC-Einheit koppelbar. Es ist möglich, dass die wenigstens eine Filter-Einheit als Umlufteinheit ausgebildet ist, also sowohl Frischluft (gefiltert) dem Reinraumplenum zuführen kann, also auch Abluft aus dem Reinraumplenum rückführen kann. Insofern sind Konstruktionen denkbar, bei denen eine Abluftrückführung, bspw. über einen bodenseitigen Luftauslass, nicht erfolgen muss. Wenn die Filter-Einheit ohne eigene Luftfördereinrichtung ausgebildet ist, dann ist vorzugsweise eine bodenseitige Abluftrückführung vorgesehen.

Mit einem erfindungsgemäßen Deckenmodul werden also wesentliche Elemente eines Reinraums - Reinraum-Decke und Reinraumtechnik - die herkömmlicherweise eine Montage besonders aufwändig machen, in einer Baueinheit zusammengefasst und modular bereitgestellt. Hierdurch wird eine Montage einer Reinraumzelle wesentlich vereinfacht. So umfasst das Deckenmodul mit der wenigstens Filter-Einheit bereits wesentliche Teile der für einen Reinraumbetrieb erforderliche Filter- und Lufttechnik, sodass eine vor-Ort-Montage von Filterelementen oder Luftkanälen nicht mehr erforderlich ist. Darüber hinaus entfällt ein zeitaufwändiges Abhängen einer Reinraum-Decke von einer äußeren Rahmenstruktur. Das Deckenmodul ist zudem für sich genommen vergleichsweise einfach montierbar. So muss das Deckenmodul lediglich mit dem Tragwerk verbunden werden, insbesondere auf entsprechende Auflageabschnitte des Tragwerks aufgelegt werden, und die wenigstens eine Filter-Einheit angeschlossen werden.

Ein erfindungsgemäßes Deckenmodul kann als vormontierte Baueinheit mit üblichen Transportmitteln, bspw. LKW, transportiert werden, was einen Transport des Deckenmoduls zu einem Bestimmungsort erleichtert. Zu diesem Zweck ist es besonders bevorzugt, wenn das Deckenmodul derart dimensioniert ist, dass es die Abmessungen eines 40-Fuß-ISO-Container - also einem ISO-Container mit einer Länge von 40 Fuß, einer Breite von 8 Fuß und einer Höhe von 8 Fuß und 6 Zoll - nicht überschreitet Dadurch kann das Deckenmodul in einem solchen 40-Fuß-ISO-Container transportiert werden oder es kann selbst zu einer Containerkonstruktion zusammengefügt werden, insbesondere mittels eines zugehörigen Transportrahmens (siehe unten).

Ein erfindungsgemäßes Deckenmodul ermöglicht es ferner, auf einfache und kostengünstige Weise auch komplexe Reinraumanlagen aus mehreren nebeneinander und/oder hintereinander angeordneten Reinraumzellen modular aufzubauen. Es ist beispielsweise denkbar, mehrere Deckenmodule nebeneinander anzuordnen und durch unterschiedliche Ausgestaltung und Anordnung von Reinraum-Seitenwandelementen individualisierte Reinraum-Strukturen aufzubauen.

Im Rahmen einer bevorzugten Ausgestaltung ist die Filter-Einheit als modulare Baueinheit mit einem eigenen Modulgehäuse ausgebildet, wobei das Modulgehäuse vollständig in dem Technikraum zwischen Modulträger und Deckenträger aufgenommen ist. Eine Strömungsverbindung zwischen Lüftereinrichtung und Filtereinrichtung ist dann innerhalb des Modulgehäuses ausgebildet. Insofern ist es nicht erforderlich, ein luftdichtes Plenum zwischen einer Lüftereinrichtung und einer Filtereinrichtung vorzuhalten. Insbesondere ist es also nicht zwingend erforderlich, den Technikraum weitgehend luftdicht auszubilden.

Vorzugsweise ist die wenigstens eine Filter-Einheit - bei bestimmungsgemäßem Montagezustand des Deckenmoduls an dem Tragwerk - von dem Deckenträger gehaltert und insbesondere dort montiert. Denkbar ist, dass die wenigstens eine Filter-Einheit auf einer Auflagefläche an der Oberseite des Deckenträgers aufliegt.

Um den Aufbau eines Reinraums bzw. einer Reinraumzelle weiter zu vereinfachen, ist es ferner bevorzugt, dass die Technikeinrichtung wenigstens eine Fluidleitung mit wenigstens einem Luftanschluss umfasst, wobei die wenigstens eine Fluidleitung insbesondere dazu ausgebildet ist, um der wenigstens einen Filter-Einheit Luft zuzuführen oder von dieser rückzuführen. Insbesondere ist der wenigstens eine Luftanschluss mit einem Anschlussstutzen zur Verbindung mit Luftleitungen ausgebildet, beispielsweise für eine Zuleitung einer HVAC-Einheit. Vorzugsweise handelt es sich bei dem Anschlussstutzen um einen Standardanschluss, was eine Montage weiter vereinfacht. Bei Ausgestaltungen des Deckenmoduls mit mehreren Filter-Einheiten kann die wenigstens eine Fluidleitung als Verteilerleitung ausgebildet sein.

Ferner ist es bevorzugt, wenn die Technikeinrichtung außerdem wenigstens eine fluidische Versorgungsleitung mit wenigstens einem Fluidanschluss umfasst. Vorzugsweise sind zwei fluidische Versorgungsleitungen für Kühlwasser (Vorlauf/Rücklauf) vorgesehen. Optional kann ferner eine Zuluft- und/oder Abluftleitung für im Reinraumplenum angeordnete Geräte vorgesehen sein. Der wenigstens eine Fluidanschluss ist insbesondere mit einem Anschlussstutzen zur Verbindung mit Fluidleitungen, beispielsweise einer externen Kühlwasserversorgung, versehen. Vorzugsweise handelt es sich bei dem Anschlussstutzen ebenfalls um einen Standardanschluss.

Ferner ist es bevorzugt, wenn die Technikeinrichtung außerdem wenigstens eine elektrische Versorgungsleitung mit wenigstens einem Kabelanschluss umfasst. Insbesondere ist eine elektrische Versorgungsleitung zur Stromversorgung der wenigstens einen Filter-Einheit und/oder zur Stromversorgung von im Reinraumplenum angeordneten Geräten vorgesehen. Ferner kann eine elektrische Versorgungsleitung Bus-Leitungen, Netzwerkkabel und/oder allgemein Datenübertragungskabeln zur Datenübertragung zwischen der wenigstens einen Filter-Einheit und/oder zwischen im Reinraumplenum angeordneten Geräten und einer externen Computereinrichtung, bspw. einem Netzwerkserver, umfassen.

Die wenigstens eine elektrische Versorgungsleitung ist vorzugsweise in einem oder mehreren Kabelkanälen angeordnet. Bei dem Kabelanschluss handelt es sich insbesondere um eine Anschlussdose oder einen Anschlusskasten, in dem Stromanschlüsse von der wenigstens einen Filter-Einheit und Geräte im Reinraumplenum zusammenlaufen. Dann kann ein Stromanschluss auf einfache Weise über einen Hauptanschluss erfolgen, was die Montage weiter erleichtert.

Für eine einfache Montage ist es ferner bevorzugt, dass der wenigstens eine Luftanschluss, der wenigstens eine Fluidanschluss und der wenigstens eine Kabelanschluss derart angeordnet sind, dass der jeweilige Anschluss von einer Oberseite des Deckenmoduls aus zugänglich ist. Insofern kann ein Anschluss der Technikeinrichtung auch dann erfolgen, wenn das Deckenmodul bereits mit dem Tragwerk verbunden ist und/oder neben weiteren Deckenmodulen angeordnet ist. Dies vereinfacht den Aufbau ausgedehnter Reinraumanlagen.

Bei einer bevorzugten Ausgestaltung ist der Deckenträger als Gitterrahmen ausgebildet, welcher eine Mehrzahl von Rahmenöffnungen begrenzt. Insofern umfasst der Deckenträger mehrere Rahmenabschnitte, die jeweils eine Rahmenöffnung umlaufen. Der Deckenträger bildet also ein Raster.

Die Rahmenöffnungen dienen jeweils zur Aufnahme einer Filter-Einheit oder einer Reinraum-Deckenplatte. Bei einer Reinraum-Deckenplatte handelt es sich um ein luft- und partikeldichtes Flächenelement, z.B. Blech.

Je nach Anforderung können dann die Rahmenöffnungen durch Filter-Einheiten oder Reinraum-Deckenplatten besetzt sein, was einen flexiblen, bedarfsgerechten Aufbau einer Reinraumzelle ermöglicht. Es ist möglich, dass jede Rahmenöffnung durch eine Filter-Einheit besetzt ist. Denkbar ist jedoch auch, dass lediglich eine Teilmenge der Rahmenöffnungen durch Filter-Einheiten besetzt und die übrigen Rahmenöffnungen sind mit Reinraum-Deckenplatten besetzt sind. Insbesondere sind mehrere Filter-Einheiten vorgesehen, welche vorzugsweise durch wenigstens eine Reinraum-Deckenplatte voneinander beabstandet sind. Dadurch können in dem unterhalb des Deckenmoduls begrenzten Reinraumplenum Sektionen definiert werden, denen dann je nach Bedarf mittels einer Filter-Einheit Luft zugeführt wird.

Der Deckenträger bildet mit den Reinraum-Deckenplatten und den Filter-Einheiten, insbesondere mit einem jeweiligen Luftauslass der Filter-Einheiten, die Reinraum-Decke. Vorzugsweise ist der Luftauslass der wenigstens einen Filter-Einheit und die Reinraum-Deckenplatte bündig mit einer Unterseite des Deckenträgers. Insbesondere sind eine jeweilige Filter-Einheit und/oder eine jeweilige Reinraum-Deckenplatte mit dem Deckenträger luft- und partikeldicht (staubdicht) verbunden.

Bei einer vorteilhaften Ausgestaltung ist der Deckenträger durch zueinander rechtwinklig angeordnete Rahmenschienen gebildet. Dadurch werden rechteckförmige Rahmenöffnungen bereitgestellt. Insbesondere sind äußere Rahmenschienen vorgesehen, welche einen Umfang des Deckenträgers definieren und innere Rahmenschienen, welche rechtwinklig zu einer Längserstreckung des Deckenträgers angeordnet sind.

Grundsätzlich ist es möglich, dass der Deckenträger monolithisch ausgebildet ist. Bevorzugt ist es jedoch, wenn die Rahmenschienen voneinander separat bereitgestellt sind und zur Vormontage des Moduls an entsprechenden Knotenpunkten über Verbindungselemente miteinander verbunden sind. Eine solche Ausgestaltung ermöglicht einen flexiblen, einfachen Aufbau des Deckenträgers. Beispielsweise ist es möglich, die Rahmenöffnungen an die Abmessungen von unterschiedlichen Filter-Einheiten anzupassen. Insbesondere sind die Rahmenschienen als Profilschienen ausgebildet, vorzugsweise aus einem stranggepressten Aluminiumprofil hergestellt. Ein solcher Deckenträger ist dann vergleichsweise leicht und trotzdem stabil.

Für einen einfachen Aufbau eines Reinraums bzw. einer Reinraumzelle ist es ferner bevorzugt, wenn der Deckenträger Verbindungsabschnitte aufweist, welche zur (insbesondere luft- und partikeldichten) Verbindung des Deckenträgers mit Reinraum-Seitenwandelementen und/oder Reinraum-Zwischenwandelementen ausgebildet sind. Dies ermöglicht es, Reinraum-Seitenwandelemente und/oder Reinraum-Zwischenwandelemente auf einfache Weise mit einem bereits montierten Deckenträger zu verbinden.

Im montierten Zustand der Reinraum-Seitenwandelemente definieren dann der Deckenträger und die Reinraum-Seitenwandelemente das Reinraumplenum. Die Reinraum-Zwischenwandelemente ermöglicht es, ein durch die Reinraum-Seitenwandelemente begrenztes Reinraumplenum weiter in Sektionen, also Unterbereiche, zu unterteilen, um so unterschiedlichen Anforderungen an Arbeitsbereiche in der Reinraumumgebung gerecht zu werden. Es ist beispielsweise denkbar, auf diese Weise in einer Reinraumzelle voneinander getrennte Arbeitsbereiche für verschiedene Prozessschritte zu definieren. Vorzugsweise sind die Verbindungsabschnitte für die Reinraum-Zwischenwandelemente derart angeordnet, dass die Reinraum-Zwischenwandelemente orthogonal zu einer Längserstreckung des Deckenmoduls angeordnet sind. Vorzugsweise sind die Verbindungsabschnitte als Verbindungsschienen ausgebildet, welche in den Rahmenschienen des Deckenträgers integriert sind. Insbesondere sind die Verbindungsabschnitte zur Verbindung des Deckenträgers mit den Reinraum-Seitenwandelementen an den äußeren Rahmenschienen angeordnet, also an denjenigen Rahmenschienen, welche einen äußeren Umfang des Deckenträgers definieren. Die Verbindungsabschnitte zur Verbindung des Deckenträgers mit Reinraum-Zwischenwandelementen sind vorzugsweise an den inneren Rahmenschienen angeordnet.

Erfindungsgemäß ist der Modulträger rechteckförmig ausgebildet, weist also insgesamt eine rechteckige Grundform auf. Der Modulträger weist hierzu erfindungsgemäß zwei Längsträger und eine Mehrzahl von Querträgern auf. Bevorzugt sind die Längsträger zueinander parallel und voneinander beabstandet. Dabei verbinden die Querträger die beiden Längsträger.

Beispielsweise beträgt das Verhältnis von Länge zu Breite des Modulträgers vier zu eins, was den Aufbau einer korridorartigen Reinraumzelle ermöglicht. Insbesondere ist der Deckenträger dann ebenfalls rechteckförmig ausgebildet.

Vorzugsweise sind die Querträger in Längsrichtung des Modulträgers gesehen voneinander beabstandet angeordnet, insbesondere in gleichmäßigen Abständen. Dann sind zwischen den Querträgern Freiräume gebildet, der Modulträger also abschnittsweise nach oben hin offen. Dies ermöglicht eine einfache Zugänglichkeit zu dem Technikraum, was für eine einfache Wartung der Technikeinrichtung vorteilhaft ist. Ferner ist eine solche Ausgestaltung für eine ausreichende Belüftung der Filter-Einheiten vorteilhaft.

Vorzugsweise sind die Längsträger und/oder die Querträger als Doppel-T-Träger ausgebildet. Dies ermöglicht eine hohe Stabilität bei vergleichsweise geringem Gewicht und ermöglicht es, das Deckenmodul mit den sich horizontal erstreckenden Abschnitten des Modulträgers (Flansch des Doppel-T-Trägers) auf entsprechende Auflageabschnitte des Tragwerks aufzulegen.

Zu diesem Zweck ist es bevorzugt, wenn jeder Längsträger einen Mittelbereich und zwei Endbereiche aufweist, wobei der Längsträger in den Endbereichen eine geringere Dicke als in dem Mittelbereich aufweist, also ein Abstand zwischen Oberseite und Unterseite des Längsträgers in den Endbereichen geringer ist als in dem Mittelbereich. Die Unterseite des Längsträgers bildet dann in den jeweiligen Endbereichen Anlageabschnitte zur Anlage an das Tragwerk. Selbstverständlich sind auch andere Ausgestaltungen denkbar, die z.B. an statische Anforderungen angepasst sind.

Unabhängig von voranstehend genannten Ausgestaltungen können in dem Deckenmodul auch weitere Funktionen integriert sein oder dort angelegt sein, welche beim Aufbau eines Reinraums vorteilhaft sind. Beispielsweise kann das Deckenmodul optional eine Brandschutzeinrichtung umfassen. So kann das Deckenmodul eine Brandschutzschicht, insbesondere in Form eines in dem Technikraum angeordneten Flächenelements aus feuerhemmendem Material, umfassen, welche mit einer Brandschutzschicht eines gebäudeseitigen Tragwerks oder einer Brandschutzschicht eines Reinraum-Seitenwandelements zur Bildung einer das Reinraumplenum umschließenden Brandschutzschicht verbindbar ist. Optional kann die Brandschutzeinrichtung ferner eine Entrauchungs-Einheit umfassen.

Die vorstehend genannte Aufgabe wird auch durch ein System gelöst, welches ein vorstehend beschriebenes Deckenmodul und einen Transportrahmen umfasst, wobei der Transportrahmen und das Deckenmodul derart ausgebildet sind, dass das Deckenmodul zum Transport in dem Transportrahmen halterbar ist. Der Transportrahmen bildet insofern ein Transportgestell für das Deckenmodul. Bei dem System handelt es sich insgesamt um eine Vorrichtung im Sinne einer Sachgesamtheit umfassend mehrere Einrichtungen, welche insbesondere zu einer Vorrichtung verbunden oder in einer übergeordneten Vorrichtung integriert sind.

Die vorstehend erläuterten Vorteile und Ausgestaltungen des Deckenmoduls können auch zur Ausgestaltung des Systems herangezogen werden.

Besonders bevorzugt ist es, wenn der Transportrahmen Anlageabschnitte aufweist, welche dazu ausgebildet sind, in einem Transportzustand des Deckenmoduls an der Unterseite des Modulträgers des Deckenmoduls anzuliegen und in einem Montagezustand des Deckenmoduls an der Oberseite des Modulträgers des Deckenmoduls anzuliegen. In dem Transportzustand stützt sich dann das Deckenmodul mit der Unterseite des Modulträgers auf dem Transportrahmen ab. In diesem Zustand ist das Deckenmodul in dem Transportrahmen gehalten. Der Transportrahmen bildet insofern ein Transportgestell für das Deckenmodul. In dem Montagezustand des Deckenmoduls kann sich dann der Transportrahmen auf der Oberseite des Modulträgers abstützen. In diesem Zustand kann der Transportrahmen dann einen Halter für weitere Funktionseinheiten, insbesondere für Reinraumtechnik (z.B. für HVAC-Einheiten), bilden. Ein derartiger Transportrahmen dient also nicht nur zum Transport des Deckenmoduls, sondern kann auch nach dem Transport beim Aufbau des Reinraums funktional weiterverwendet werden.

Das System ist vorzugsweise derart ausgebildet, dass im Transportzustand zumindest zwei Systeme aus Deckenmodul und zugehörigem Transportrahmen aufeinander stapelbar sind. Dies ermöglicht einen platzsparenden Transport mehrerer Deckenmodule, beispielsweise zum Aufbau einer Reinraumanlage aus mehreren Reinraumzellen. Insbesondere sind das Deckenmodul und der Transportrahmen derart dimensioniert, dass zwei aufeinandergestapelte Systeme aus jeweils einem Deckenmodul und einem Transportrahmen die Abmessungen eines 40-Fuß-ISO-Containers nicht überschreiten.

Vorzugsweise ist der Transportrahmen im Längsschnitt im Wesentlichen U-förmig ausgebildet mit einem langen Schenkel und zwei kurzen Schenkeln. Im Transportzustand verläuft der lange Schenkel bodenseitig, insbesondere horizontal, und die beiden kurzen Schenkel verlaufen im Wesentlichen vertikal. Die freien Enden der kurzen Schenkel bilden die Anlageabschnitte zur Anlage an den Modulträger des Deckenmoduls.

Im Transportzustand ist das Deckenmodul dann derart angeordnet, dass die Technikeinrichtung in einem zwischen den kurzen Schenkeln gebildeten Transportraum des Transportrahmens angeordnet ist. Bei einer solchen Ausgestaltung ist die Technikeinrichtung durch den Transportrahmen beim Transport geschützt. Wenn der Transportrahmen wie vorstehend erläutert im Montagezustand des Deckenmoduls an der Oberseite des Modulträgers angeordnet ist, bildet der Transportraum einen Verteilerraum zur Anordnung von Verteilerleitungen, beispielsweise für Verbindungsleitungen zur Verbindung von benachbart angeordneten Deckenmodulen.

Die vorstehend genannte Aufgabe wird ferner durch ein System gelöst, welches ein vorstehend beschriebenes Deckenmodul und wenigstens ein mit dem Deckenmodul, insbesondere mit einem Deckenträger des Deckenmoduls, verbindbares oder verbundenes Reinraum-Seitenwandelement umfasst. Wie bereits erläutert bilden der Deckenträger und das wenigstens eine Reinraum-Seitenwandelement eine das Reinraumplenum der Reinraumzelle definierende Struktur.

Das wenigstens eine Reinraum-Seitenwandelement kann ferner eine oder mehrere der nachfolgend genannten Funktionseinheiten aufweisen.

Beispielsweise kann das wenigstens eine Reinraum-Seitenwandelement eine Tür zum Zutritt in das Reinraumplenum aufweisen.

Alternativ oder zusätzlich kann das wenigstens eine Reinraum-Seitenwandelement wenigstens ein Fenster aufweisen. Dies ermöglicht es, das Reinraumplenum mit Tageslicht zu beleuchten und die in dem Reinraumplenum ablaufenden Prozesse von außen zu überwachen.

Alternativ oder zusätzlich kann das wenigstens eine Reinraum-Seitenwandelement einen integrierten, also in einen innerhalb des wenigstens einen Reinraum-Seitenwandelements (bspw. zwischen zwei äußeren Wandabschnitten) angeordneten, Fluidkanal für Abluft und/oder wenigstens einen integrierten Kabelkanal für Elektroleitungen aufweisen, so dass keine zusätzlichen Kanäle bzw. Leitungen innerhalb oder außerhalb des Reinraumplenums geführt werden müssen.

Alternativ oder zusätzlich kann das wenigstens eine Reinraum-Seitenwandelement ferner wenigstens einen Luftauslass, beispielsweise in Form eines Lochblechs, aufweisen. Insbesondere ist der Luftauslass in einem verbundenen Zustand des wenigstens einen Reinraum-Seitenwandelements und des Deckenmoduls an dem Ende des wenigstens einen Reinraum-Seitenwandelements angeordnet, welches dem Deckenmodul abgewandt ist. Insofern ist der Luftauslass bei bestimmungsgemäßen Einbau des Reinraum-Seitenwandelements in Bodennähe angeordnet. Dies ermöglicht es, Abluft bodenseitig rückzuführen.

Alternativ oder zusätzlich kann das wenigstens eine Reinraum-Seitenwandelement ferner wenigstens eine Durchführeinrichtung zum luft- und partikeldichten Durchführen von Versorgungsleitungen, z.B. Wasserleitungen und/oder Gasleitungen und/oder Stromleitungen, durch das Reinraum-Seitenwandelement aufweisen.

Alternativ oder zusätzlich kann das wenigstens eine Reinraum-Seitenwandelement ferner eine Brandschutzschicht aufweisen, vorzugsweise in Form einer in das Reinraum-Seitenwandelement integrierte Schutzschicht aus feuerhemmenden Materialien.

Je nach Anforderung können die Reinraum-Seitenwandelemente mit einem oder mehreren der vorstehend genannten Funktionseinheiten ausgestattet sein. Dies ermöglicht es, eine Reinraumzelle individuell an unterschiedliche Anforderungen anpassen zu können - unter Verwendung des gleichen Deckenmoduls. Es ist auch denkbar, ein Set von Standard-Reinraum-Seitenwandelementen (bspw. ein Reinraum-Seitenwandelement mit Tür, ein Reinraum-Seitenwandelement mit Fenster, etc.) bereitzustellen, welche dann zur Bildung von bedarfsgerechten Reinraumzellen modular zusammengestellt werden können. Ein solcher modularer Aufbau aus Standardbauteilen ist besonders zeit- und kosteneffizient.

Im Rahmen einer weiteren bevorzugten Ausgestaltung kann das System aus Deckenmodul und wenigstens einem Reinraum-Seitenwandelement außerdem wenigstens ein mit dem Deckenmodul, insbesondere mit einem Deckenträger des Deckenmoduls, verbindbares oder verbundenes Reinraum-Zwischenwandelement umfassen. Das wenigstens eine Reinraum-Zwischenwandelement kann in analoger Weise zu dem Reinraum-Seitenwandelement ausgebildet sein und optional eine oder mehrere der vorstehend in Bezug auf das Reinraum-Seitenwandelement beschriebenen Funktionseinheiten (Tür, Fenster, Luftauslass, Durchführeinrichtung, Brandschutzschicht, etc.) aufweisen.

Wie vorstehend bereits erläutert ermöglicht ein solches Reinraum-Zwischenelement eine flexible Unterteilung des unterhalb des Deckenmoduls begrenzten Reinraumplenums. Es können also flexibel Sektionen definiert werden, zum Beispiel um unterschiedliche Anforderungen an Arbeitsbereiche in der Reinraum Umgebung gerecht zu werden.

Insofern ergeben sich zusätzliche Konfigurationsmöglichkeiten, was eine noch weitergehende Individualisierung der Reinraumzelle ermöglicht.

Der vorstehend beschriebene modulare Aufbau einer Reinraumzelle aus Deckenmodul, Reinraum-Seitenwandelementen (mit optionalen Funktionseinheiten) und Reinraum-Zwischenwandelementen (mit optionalen Funktionseinheiten) ermöglicht es, komplexe Reinraumanlagen aus mehreren Reinraumzellen modular aufzubauen. Es ist insbesondere möglich, ein Set aus einer begrenzten Anzahl von Standard-Reinraumzellen vorzusehen, welche dann zur Bildung von komplexen, individuellen Reinraumanlagen (aus mehreren Reinraumzellen) modular zusammengestellt werden können. Eine solche modulare Reinraumanlage kann dann schnell aufgebaut werden. Zudem ist eine aus Standard-Reinraumzellen aufgebaute Reinraumanlage vergleichsweise kostengünstig. Ferner ermöglicht es eine solche Ausgestaltung, bestehende Reinraumanlagen auf einfache Weise modular zu erweitern.

Ein weiterer Vorteil der beschriebenen modularen Bauweise ist, dass ein erheblicher Teil der für den Reinraumbau nötigen Arbeitsschritte in einer kontrollierten Arbeitsumgebung durchgeführt werden kann und daher weniger Arbeitsschritte auf der Baustelle erforderlich sind. Dadurch wird die Unfallgefahr reduziert.

Die Erfindung wird im Folgenden anhand der Figuren näher erläutert.

Es zeigen:
- Figur 1: eine skizzierte Darstellung eines Systems zum Aufbau einer Reinraumzelle in einer Seitenansicht;
- Figur 2: eine skizzierte Darstellung einer Reinraumzelle in einem montierten Zustand in einer Seitenansicht;
- Figur 3: eine skizzierte Darstellung eines Deckenmoduls der Reinraumzelle gemäß Figur 2 in einer Seitenansicht;
- Figur 4: eine skizzierte Darstellung des Deckenmoduls gemäß Figur 3 in einer ersten perspektivischen Ansicht;
- Figur 5: eine skizzierte Darstellung des Deckenmoduls gemäß Figur 3 in einer zweiten perspektivischen Ansicht;
- Figur 6: eine skizzierte Darstellung eines Systems umfassend ein Deckenmodul gemäß Figur 3 und einen Transportrahmen in einer Seitenansicht;
- Figur 7: eine skizzierte Darstellung der Reinraumzelle gemäß Figur 2 mit einer Brandschutzeinrichtung in einer ersten Ausgestaltung in einer Seitenansicht;
- Figur 8: eine skizzierte Darstellung der Reinraumzelle gemäß Figur 2 mit einer Brandschutzeinrichtung in einer zweiten Ausgestaltung in einer Seitenansicht;
- Figur 9: eine skizzierte Darstellung mehrerer Reinraum-Seitenwandelemente mit unterschiedlichen Funktionseinheiten in einer Seitenansicht;
- Figur 10: eine schematische Darstellung von Reinraumzellen mit unterschiedlich konfigurierten Reinraum-Zwischenwandelementen in einer Draufsicht; und
- Figur 11: eine schematische Darstellung einer beispielhaften Ausgestaltung einer aus Reinraumzellen aufgebauten Reinraumanlage in einer Draufsicht.

In der nachfolgenden Beschreibung sowie in den Figuren sind für identische oder einander entsprechende Merkmale jeweils dieselben Bezugszeichen verwendet.

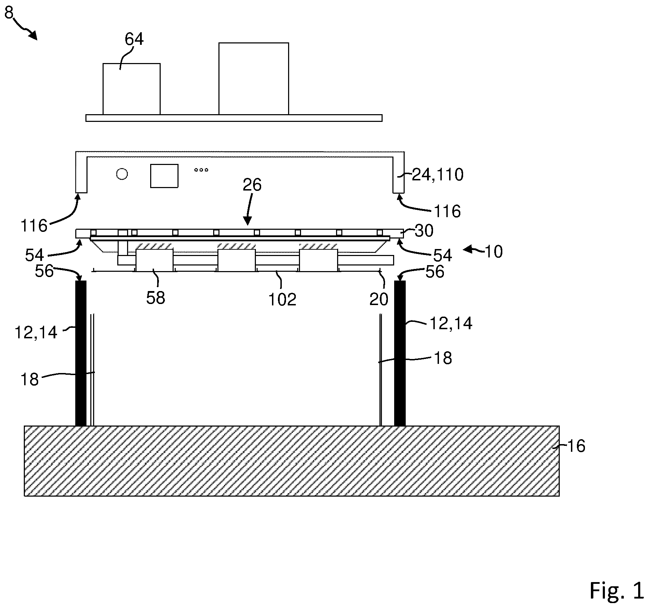

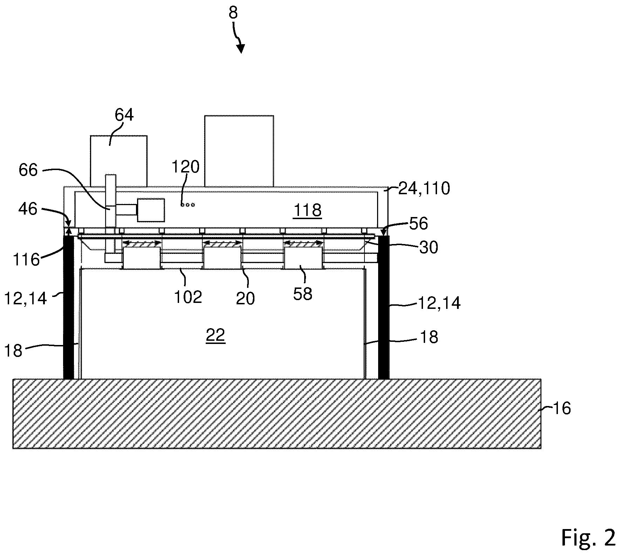

In Figur 1 ist ein System zum Aufbau einer insgesamt mit dem Bezugszeichen 8 bezeichneten Reinraumzelle skizziert. Eine solche Reinraumzelle 8 ist in Figur 2 in einem fertig montierten Zustand dargestellt.

Das System umfasst ein Deckenmodul 10, welches in einem in Figur 2 dargestellten Montagezustand auf einem Tragwerk 12 angeordnet und mit diesem verbunden ist. Das Tragwerk 12 ist in dem vorliegenden Beispiel durch Pfeiler 14 (bspw. Stahlträger) gebildet, welche auf einem Fundament 16, insbesondere senkrecht, angeordnet sind. Bei dem Fundament 16 kann es sich um einen Gebäudeboden handeln.

Das System umfasst ferner mehrere Reinraum-Seitenwandelemente 18, welche im montierten Zustand der Reinraumzelle 8 mit einem Deckenträger 20 des Deckenmoduls 10 zusammenwirken und gemeinsam mit diesem ein Reinraumplenum 22, d.h. den eigentlichen Reinraum-Bereich der Reinraumzelle 8, definieren (vgl. Figur 2).

Das System umfasst ferner einen Halter 24, welcher in einem montierten Zustand der Reinraumzelle 8 an einer Oberseite 26 des Deckenmoduls 10 angeordnet ist. Der Halter 24 ist wie nachfolgend noch näher beschrieben durch einen Transportrahmen 110 gebildet, welcher zur Halterung des Deckenmoduls 10 während eines Transports dient.

Bei nicht dargestellten Ausführungsformen kann das System ferner ein Reinraum-Bodenelement, beispielsweise einen auf einem Gebäudeboden angeordneten Reinraum-Bodenbelag, umfassen. Diese Reinraum-Bodenelemente sind vorzugsweise flächenmäßig an das Deckenmodul angepasst. Insbesondere ist vorgesehen, die Reinraum-Bodenelemente ebenfalls als modulare Konstruktion auszubilden, mit einem Tragrahmen und wenigstens einer daran befestigten Deckschicht. Insbesondere umfasst die Deckschicht als oberste Schicht einen Bodenbelag, der an den jeweiligen Verwendungszweck des Reinsaums angepasst ist.

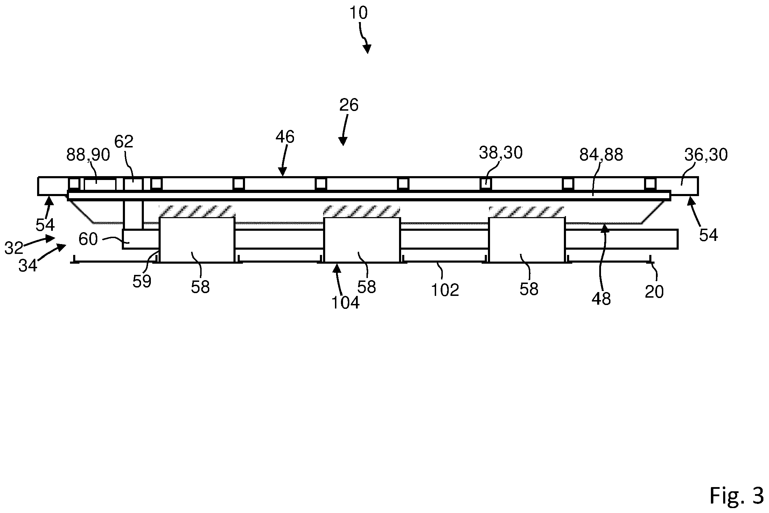

Im Folgenden wird zunächst das Deckenmodul 10 unter Bezugnahme auf die Figuren 3 bis 5 im Detail beschrieben.

Das Deckenmodul 10 umfasst einen Modulträger 30, welcher zur Anordnung und Verbindung mit dem Tragwerk 12 dient. Das Deckenmodul 10 umfasst ferner den vorstehend bereits erwähnten Deckenträger 20. Bei bestimmungsgemäßem Einbau des Deckenmoduls 10 ist der Deckenträger unterhalb des Modulträgers 30 angeordnet ist und ist von diesem beabstandet. Dadurch wird ein Technikraum 32 zwischen dem Deckenträger 20 und dem Modulträger 30 gebildet (vgl. Figur 3). In dem Technikraum 32 ist eine Technikeinrichtung 34 angeordnet, welche nachfolgend noch näher beschriebene Reinraumtechnik umfasst. Das Deckenmodul 10 ist also selbst modular aufgebaut aus Modulträger 30, Deckenträger 20 und zwischen Modulträger 30 und Deckenträger 20 angeordneter Technikeinrichtung 34. Diese Baueinheiten sind zu dem Deckenmodul 10 vormontiert.

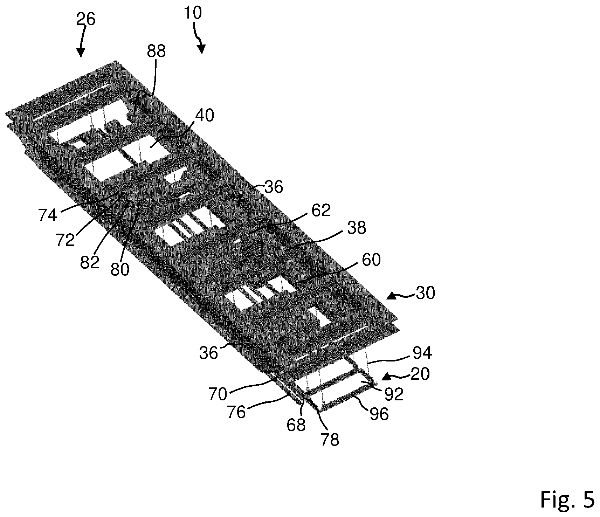

Der Modulträger 30 weist in dem vorliegenden Beispiel insgesamt eine rechteckige Grundform auf und ist durch zwei zueinander parallele und voneinander beabstandete Längsträger 36 gebildet, welche durch eine Mehrzahl von Querträgern 38 miteinander verbunden sind (vgl. Figur 5). Die Querträger 38 sind, in Längsrichtung des Modulträgers 30 betrachtet, in gleichmäßigen Abständen angeordnet, sodass zwischen den Querträgern 38 Freiräume 40 gebildet sind, welche einen Zugang zu dem Technikraum 32 von der Oberseite 26 des Deckenmoduls 10 aus ermöglichen. Beispielhaft und bevorzugt sind die Längsträger 36 und die Querträger 38 als Doppel-T-Träger ausgebildet (vgl. Figur 5) .

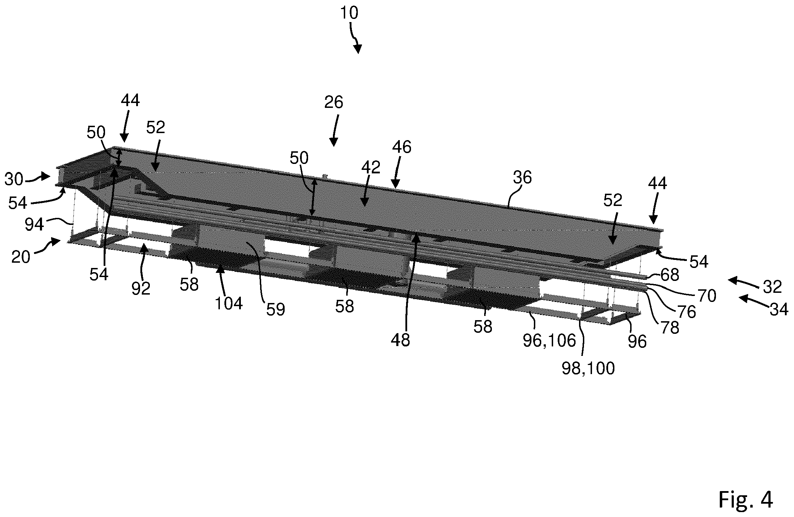

Die beiden Längsträger 36 sind im vorliegenden Beispiel zueinander identisch ausgebildet. Jeder Längsträger 36 weist einen Mittelbereich 42 und zwei Endbereiche 44 auf (vgl. Figur 4). In diesen Bereichen verlaufen eine Oberseite 46 des Längsträgers 36 und eine Unterseite 48 des Längsträgers 36 zueinander parallel. In den Endbereichen 44 weist der Längsträger 36 eine geringere Dicke (in Figur 4 durch die mit Bezugszeichen 50 bezeichneten Doppelpfeile hervorgehoben) - also einen geringeren Abstand zwischen Oberseite 46 und Unterseite 48 des Längsträgers 36 - auf, wobei sich die Dicke in einem jeweiligen Übergangsbereich 52 zwischen dem Mittelbereich 42 und dem jeweiligen Endbereich 44 linear verringert (vgl. Figur 4).

Die Unterseite 48 der Längsträger 36 - im vorliegenden Beispiel ein jeweiliger unterer Flansch der als Doppel-T-Träger ausgebildeten Längsträger 36 - bildet in den jeweiligen Endbereichen 44 Anlageabschnitte 54. In einem Montagezustand des Deckenmoduls 10 liegen diese Anlageabschnitte 54 dann auf entsprechenden Auflageabschnitten 56 des Tragwerks 12 auf (vgl. Figur 2).

Die Technikeinrichtung 34 des Deckenmoduls 10 umfasst in dem dargestellten Beispiel drei Filter-Einheiten 58. Diese Ausgestaltung ist nicht zwingend und kann an den jeweiligen Anwendungszweck angepasst werden. Die Filter-Einheiten 58 sind als modulare Baueinheiten mit jeweils einem eigenen Modulgehäuse 59 ausgebildet, wobei das jeweilige Modulgehäuse 59 vollständig in dem Technikraum 32 zwischen Modulträger 30 und Deckenträger 20 aufgenommen ist (vgl. Figuren 3 und 4). Zur Zuluft-und/oder Rückluftführung sind die Filter-Einheiten 58 über eine gemeinsame Fluidleitung 60 miteinander verbunden (vgl. Figuren 3 und 5). Die Fluidleitung 60 weist einen Luftanschluss 62 auf, welcher in die Oberseite 26 des Deckenmoduls 10 einmündet. In einem fertig montierten Zustand des Deckenmoduls 10 am Tragwerk 12 ist der Luftanschluss 62 dann mit einer HVAC-Einheit 64 über eine Anschlussleitung 66 verbindbar (vgl. Figur 2).

Die Technikeinrichtung 34 umfasst ferner eine fluidische Versorgungsleitung 68 für einen Kühlwasser-Vorlauf und eine fluidische Versorgungsleitung 70 für einen Kühlwasser-Rücklauf. Die Versorgungsleitungen 68,70 verlaufen im vorliegenden Beispiel im Wesentlichen parallel zu einer Längserstreckung des Deckenmoduls 10 (vgl. Figur 4). Die fluidischen Versorgungsleitungen 68, 70 weisen jeweils einen Fluidanschluss 72, 74 zum Anschluss an eine externe Kühlwasserversorgung auf. Wie aus Figur 5 ersichtlich münden die Fluidanschlüsse 72, 74 beispielhaft und bevorzugt ebenfalls in eine Oberseite 26 des Deckenmoduls 10 ein.

In dem vorliegenden Beispiel umfasst die Technikeinrichtung 34 ferner eine fluidische Versorgungsleitung 76 zur Zuluftführung für im Reinraumplenum 22 angeordnete Reinraumgeräte (nicht dargestellt) und eine korrespondierende fluidische Versorgungsleitung 78 zur Abluftführung. Die fluidische Versorgungsleitung 76 zur Zuluftführung und die fluidische Versorgungsleitung 78 zur Abluftführung weisen jeweils einen Fluidanschluss 80, 82 auf. Wie aus Figur 5 ersichtlich, münden die Anschlüsse 80, 82 ebenfalls in die Oberseite 26 des Deckenmoduls 10 ein.

Darüber hinaus umfasst die Technikeinrichtung 34 mehrere elektrische Versorgungsleitungen 84, welche insbesondere zur Stromversorgung der Filter-Einheiten 58 und zur Stromversorgung von in dem Reinraumplenum 22 angeordneten Reinraumgeräten (nicht dargestellt) dienen. Die elektrischen Versorgungsleitungen 84 sind vorzugsweise in einem oder mehreren Kabelkanälen 86 angeordnet (vgl. Figur 3). Ein Kabelanschluss 90 wird dadurch bereitgestellt, dass die elektrischen Versorgungsleitungen 84 in einem elektrischen Anschlusskasten 88 münden. Der Anschlusskasten 88 ist derart angeordnet, dass er von der Oberseite 26 des Deckenmoduls 10 aus zugänglich ist. Beispielhaft ist der elektrische Anschlusskasten 88 im Bereich eines Freiraums 40 zwischen zwei Querträgern 38 des Modulträgers 30 angeordnet (vgl. Figur 3). Zur besseren Übersichtlichkeit sind die elektrischen Versorgungsleitungen 84 und der Anschlusskasten 88 in einigen Figuren nicht dargestellt.

Der Deckenträger 20 ist in dem vorliegenden Beispiel als Gitterrahmen ausgebildet, welcher eine Mehrzahl von Rahmenöffnungen 92 begrenzt. Wie aus den Figuren 4 und 5 ersichtlich, ist der Deckenträger 20 über Traganker 94 (insbesondere mit Gewindestangen) von dem Modulträger 30 abgehängt.

Der Deckenträger 20 ist beispielhaft und bevorzugt durch zueinander rechtwinklig angeordnete Rahmenschienen 96 gebildet, welche in Knotenpunkten 98 über entsprechende Verbindungselemente 100 miteinander verbunden sind. Vorzugsweise sind die Rahmenschienen 96 als Aluminium-Profilschienen ausgebildet.

Die Rahmenöffnungen 92 dienen jeweils zur Anordnung einer Filter-Einheit 58 oder einer Reinraum-Deckenplatte 102 (vgl. Figur 3). Je nach Bedarf können eine oder mehrere Rahmenöffnungen 92 durch eine Filter-Einheit 58 besetzt sein. Die übrigen, also die nicht durch Filter-Einheiten 58 besetzten Rahmenöffnungen 92, sind dann mit Reinraum-Deckenplatten 102 versehen.

In dem vorliegenden Beispiel sind drei Rahmenöffnungen 92 mit Filter-Einheiten 58 besetzt, wobei zwischen den mit Filter-Einheiten 58 besetzten Rahmenöffnungen 92 jeweils eine mit einer Reinraum-Deckenplatte 102 besetzte Rahmenöffnung 92 angeordnet ist (vgl. Figur 3). Die Reinraum-Deckenplatten 102 und die Filter-Einheiten 58 sind mit dem Deckenträger 20 luft- und partikeldicht verbunden und an diesem gehalten.

Der Deckenträger 20 bildet mit den Reinraum-Deckenplatten 102 und den Filter-Einheiten 58, genauer gesagt jeweiligen Luftauslassen 104 der Filter-Einheiten 58, die Reinraum-Decke. In den Figuren 4 und 5 sind die Reinraum-Deckenplatten 102 zur besseren Darstellung entfernt.

Der Deckenträger 20 weist ferner Verbindungsabschnitte 106 auf, welche zur luft- und partikeldichten Verbindung des Deckenträgers 20 mit Reinraum-Seitenwandelementen 18 ausgebildet sind. Die Verbindungsabschnitte 106 sind im vorliegenden Beispiel als Verbindungsschienen ausgebildet, welche in den äußeren Rahmenschienen 96 des Deckenträgers 20, also in denjenigen Rahmenschienen 96, welche einen Umfang des Deckenträgers 20 definieren, integriert sind.

Zum Aufbau der Reinraumzelle 8 wird das Deckenmodul 10 auf dem Tragwerk 12 angeordnet, sodass die Anlageabschnitte 54 des Modulträgers in Anlage mit den Auflageabschnitten 56 des Tragwerks 12 gelangen. Zusätzlich werden die Reinraum-Seitenwandelemente 18 über die Verbindungsabschnitte 106 mit dem Deckenträger 20 verbunden, sodass das Reinraumplenum 22 gebildet wird.

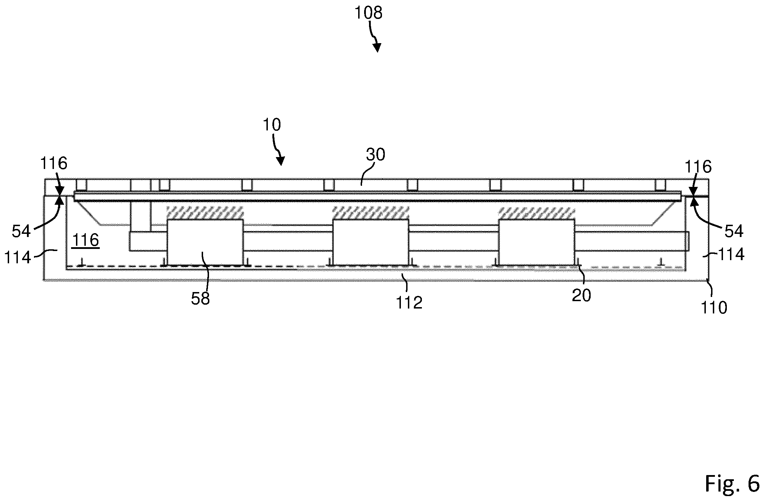

In Figur 6 ist ein System 108 gezeigt, welches ein vorstehend erläutertes Deckenmodul 10 und einen Transportrahmen 110 umfasst. Der Transportrahmen 110 dient zur Halterung des Deckenmoduls 10 während eines Transports.

Der Transportrahmen 110 ist im Wesentlichen U-förmig ausgebildet mit einem langen Schenkel 112 und zwei kurzen Schenkeln 114. Der lange Schenkel 112 verläuft in einem in Figur 6 dargestellten Transportzustand bodenseitig, insbesondere horizontal. Die zwei kurzen Schenkeln 114 verlaufen dann im Wesentlichen vertikal. Die freien Enden der kurzen Schenkel 114 des Transportrahmens 110 bilden Anlageabschnitte 116 zur Anlage an die Anlageabschnitte 54 an der Unterseite 48 des Modulträgers 30 - welche in einem Montagezustand des Deckenmoduls 10 mit den tragwerkseitigen Auflageabschnitten 56 zusammenwirken (siehe oben).

Wie aus Figur 6 ersichtlich ist die Technikeinrichtung 34 und der Deckenträger 20 des Deckenmoduls 10 in dem Transportzustand in einem zwischen den kurzen Schenkeln 114 des Transportrahmens 110 gebildeten Transportraum 118 angeordnet.

In einem Montagezustand des Deckenmoduls 10 - also dann, wenn das Deckenmodul 10 aus dem Transportrahmen 110 entfernt ist und mit dem Tragwerk 12 verbunden ist - kann der Transportrahmen 110 wie bereits vorstehend erläutert auf der Oberseite 26 des Deckenmoduls 10 angeordnet sein. Dann liegen die Anlageabschnitte 116 des Transportrahmens 110 an der Oberseite 46 des Modulträgers 30 an (vgl. Figur 2). Der Transportrahmen 110 bildet dann wie bereits erläutert einen Halter 24, insbesondere für die HVAC-Einheit 64. Der Transportraum 118 dient dann als Verteilerraum, in welchem Verteilerleitungen 120, beispielsweise Verteilerleitungen zur Verbindung der Versorgungsleitungen 68,70,76,78,84 mit entsprechenden Versorgungsleitungen von benachbart angeordneten Deckenmodulen 10, angeordnet sein können (vgl. Figur 2).

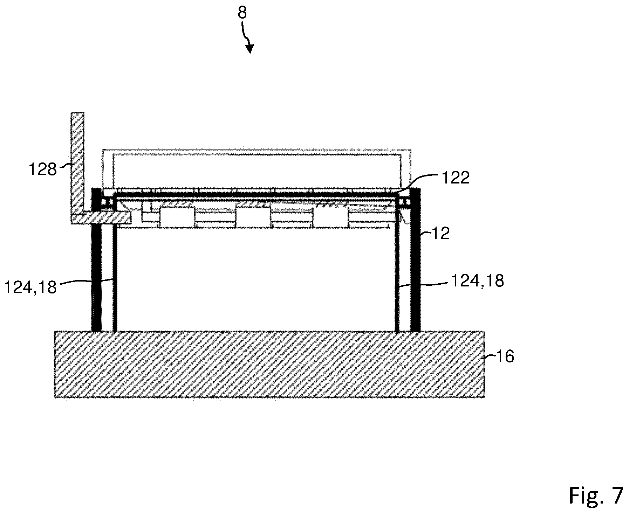

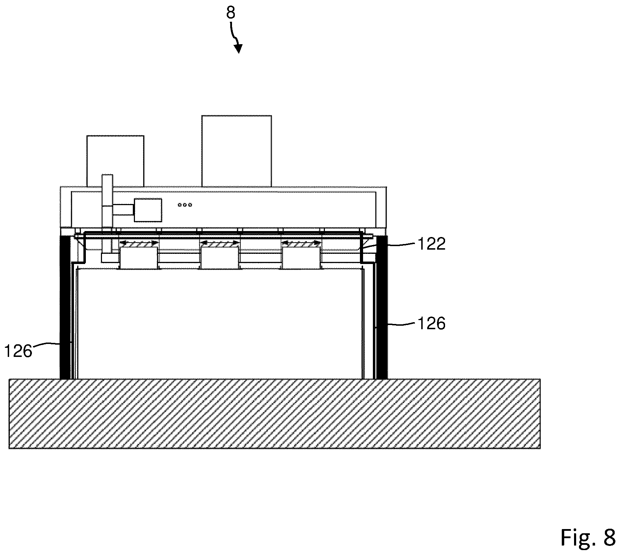

Bei einer in den Figuren 7 und 8 dargestellten Ausgestaltung kann die Reinraumzelle 8 ferner eine Brandschutzeinrichtung aufweisen. Zu diesem Zweck kann das Deckenmodul 10 mit einer Brandschutzschicht 122 versehen sein, welche in einer ersten, in Figur 7 dargestellten Ausgestaltung mit einer Brandschutzschicht 124 eines jeweiligen Reinraum-Seitenwandelements 18 zur Bildung eines das Reinraumplenum 22 umschließenden Brandschutzschicht verbindbar ist. Bei einer alternativen, in Figur 8 dargestellten Ausgestaltung kann die Brandschutzschicht 122 des Deckenmoduls 10 derart ausgebildet sein, um mit einer tragwerkseitigen Brandschutzschicht 126 verbunden zu werden. Optional kann die Reinraumzelle 8 ferner eine Entrauchungs-Einheit 128 aufweisen (vgl. Figur 7).

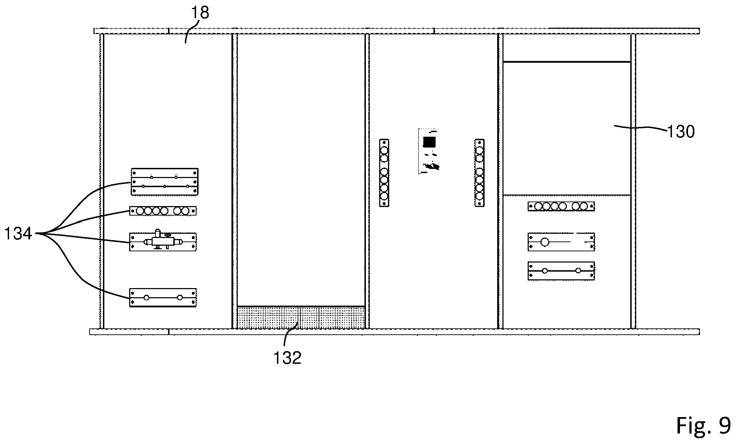

In Figur 9 sind beispielhaft verschiedene Ausgestaltungen von Reinraum-Seitenwandelementen 18 dargestellt, welche unterschiedliche Funktionseinheiten aufweisen. Beispielsweise kann ein Reinraum-Seitenelement 18 ein Fenster 130 aufweisen. Ferner ist es möglich, dass ein Reinraum-Seitenwandelement 18 einen Luftauslass 132 für Abluft aufweist, beispielhaft und bevorzugt in Form eines Lochblechs, welches an einem bodenseitigen Ende des Reinraum-Seitenwandelements 18 angeordnet ist. Darüber hinaus können Durchführeinrichtungen 134 zum luft- und partikeldichten Durchführen von Versorgungsleitungen (beispielsweise Wasserleitungen, Gasleitungen, Kabel, etc.) durch das Reinraum-Seitenwandelement 18 vorgesehen sein. Bei nicht dargestellten Ausführungsformen kann ein Reinraum-Seitenwandelement 18 ferner einen integrierten Fluidkanal für Abluft und/oder wenigstens einen integrierten Kabelkanal für Elektroleitungen oder Netzwerkkabel etc. aufweisen. Bei weiteren Ausführungsformen kann das Reinraum-Seitenelement 18 eine Tür aufweisen. Die Reinraum-Seitenwandelemente 18 können jeweils eine oder mehrere der vorstehend genannten Funktionseinheiten aufweisen.

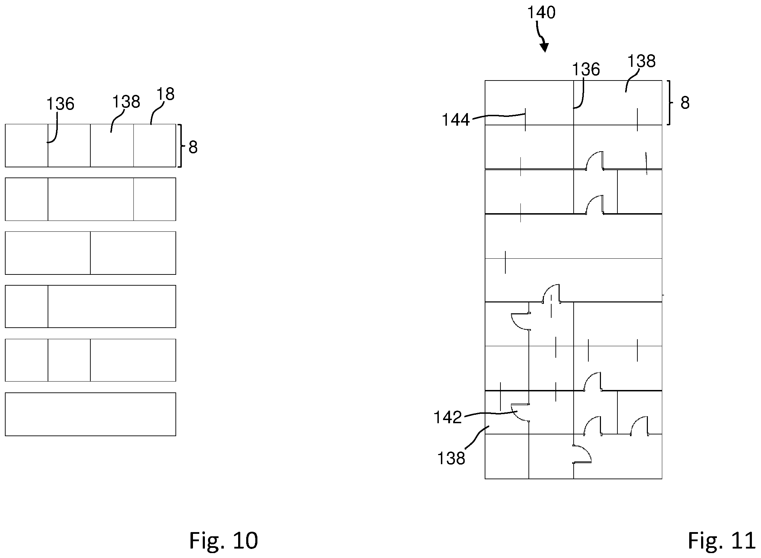

Bei einer weiteren Ausgestaltung können ferner Reinraum-Zwischenwandelemente 136 vorgesehen sein, welche dazu ausgebildet sind, ein durch die Reinraum-Seitenwandelemente 18 definiertes Reinraumplenum 22 in Sektionen 138 zu unterteilen (vgl. Figur 10). Die Reinraum-Zwischenwandelemente 136 können in analoger Weise zu den Reinraum-Seitenwandelementen 18 ausgebildet sein und optional ebenfalls vorstehend in Bezug auf die Reinraum-Seitenwandelemente 18 beschriebene Funktionseinheiten aufweisen.

Figur 10 zeigt beispielhaft verschiedene Konfigurationsmöglichkeiten einer Reinraumzelle 8, welche sich aus einer unterschiedlichen Anzahl und Anordnung von Reinraum-Zwischenwandelementen 136 ergeben. Die in Figur 10 dargestellten beispielhaften Reinraumzellen 8 stellen ein Set aus Standard-Reinraumzellen dar, welche zur Bildung von komplexen Reinraumanlagen modular zusammengestellt werden können.

Wie aus Figur 10 ersichtlich sind die Reinraum-Zwischenwandelemente 136 insbesondere orthogonal zu einer Längserstreckung des Deckenmoduls 10 angeordnet. Zur Verbindung eines Reinraum-Zwischenwandelements 136 mit dem Deckenträger 20 kann der Deckenträger 20 Verbindungsabschnitte (nicht dargestellt) aufweisen, welche vorzugsweise analog zu den Verbindungsabschnitten zur Verbindung des Deckenträgers 20 mit den Reinraum-Seitenwandelementen 18 ausgebildet sind, jedoch insbesondere in die quer zu einer Längserstreckung des Deckenträgers 20 verlaufenden inneren Rahmenschienen 96 integriert sind.

Figur 11 zeigt ein Beispiel für eine Reinraumanlage 140, welche aus mehreren nebeneinander angeordneten Reinraumzellen 8 - genauer gesagt aus den in Figur 10 dargestellten Standard-Reinraumzellen - modular aufgebaut ist. Wie aus Figur 11 ersichtlich, ist es durch unterschiedliche Ausgestaltung der Reinraum-Seitenwandelemente 18 und der Reinraum-Zwischenwandelementen 136 möglich, auch komplexe Reinraumstrukturen auszubilden. Beispielsweise sind in der in Figur 11 dargestellten Reinraumanlage 140 einzelne Reinraum-Seitenwandelemente 18 bzw. Reinraum-Zwischenwandelemente 136 mit Türen 142 ausgestattet, um einen Durchgang von einer Sektion 138 einer Reinraumzelle 8 zu einer anderen Sektion 138 der Reinraumzelle 8 oder zu einer Sektion 138 einer benachbarten Reinraumzelle 8 zu ermöglichen. Ferner sind einzelne Sektionen 138 zu gemeinsamen Sektionen verbunden (in Figur 11 durch die mit Bezugszeichen 144 bezeichneten vertikalen Striche angedeutet).

## Patentansprüche

1. Deckenmodul (10) zum Aufbau einer Reinraumzelle (8), umfassend:
- einen Modulträger (30) zur Anordnung und Verbindung mit einem Tragwerk (12);
- eine Technikeinrichtung (34) umfassend wenigstens eine Filter-Einheit (58);
- einen Deckenträger (20), welcher von dem Modulträger (30) derart beabstandet ist, dass ein Technikraum (32) zwischen dem Deckenträger (20) und dem Modulträger (30) gebildet ist,
wobei der Modulträger (30), der Deckenträger (20) und die Technikeinrichtung (34) zu einer Baueinheit verbunden sind, und wobei die Technikeinrichtung (34) innerhalb des Technikraumes (32) angeordnet ist, wobei der Modulträger (30) rechteckförmig ausgebildet ist mit zwei Längsträgern (36) und einer Mehrzahl von Querträgern (38).

2. Deckenmodul (10) nach Anspruch 1, wobei die Filter-Einheit (58) als modulare Baueinheit mit einem eigenen Modulgehäuse (59) ausgebildet ist, wobei das Modulgehäuse (59) vollständig in dem Technikraum (32) zwischen Modulträger (30) und Deckenträger (20) aufgenommen ist.

3. Deckenmodul nach einem der vorherigen Ansprüche, wobei die Filter-Einheit (58) wenigstens eine Filtereinrichtung zum Filtern von Luft und eine Luftfördereinrichtung zum Erzeugen einer Luftströmung umfasst.

4. Deckenmodul (10) nach einem der vorherigen Ansprüche, wobei die Technikeinrichtung (34) außerdem umfasst:
- wenigstens eine Fluidleitung (60) - zur Zuluft- und/oder Rückluftführung für die wenigstens eine Filter-Einheit (58) - mit wenigstens einem Luftanschluss (62);
- wenigstens eine fluidische Versorgungsleitung (68,70,76,78) mit wenigstens einem Fluidanschluss (72,74,80,82) ;
- wenigstens eine elektrische Versorgungsleitung (84) mit wenigstens einem Kabelanschluss (90).

5. Deckenmodul (10) nach Anspruch 4, wobei der wenigstens eine Luftanschluss (62), der wenigstens eine Fluidanschluss (72,74,80,82) und der wenigstens eine Kabelanschluss (90) derart angeordnet sind, dass der jeweilige Anschluss von einer Oberseite (26) des Deckenmoduls (10) aus zugänglich ist.

6. Deckenmodul (10) nach einem der vorherigen Ansprüche, wobei der Deckenträger (20) als Rahmen ausgebildet ist, welcher eine Mehrzahl von Rahmenöffnungen (92) begrenzt, wobei die Rahmenöffnungen (92) jeweils zur Anordnung einer Filter-Einheit (58) oder einer Reinraum-Deckenplatte (102) ausgebildet sind.

7. Deckenmodul (10) nach Anspruch 6, wobei eine Teilmenge der Rahmenöffnungen (92) durch Filter-Einheiten (58) besetzt ist und die übrigen Rahmenöffnungen (92) mit Reinraum-Deckenplatten (102) besetzt sind, insbesondere wobei eine jeweilige Filter- Einheit (58) und/oder eine jeweilige Reinraum-Deckenplatte (102) mit dem Deckenträger (20) luft- und partikeldicht verbunden sind.

8. Deckenmodul (10) nach einem der Ansprüche 6 oder 7, wobei der Deckenträger (20) durch zueinander rechtwinklig angeordnete Rahmenschienen (96) gebildet ist, welche über Verbindungselemente (100) miteinander verbunden sind, und/oder wobei der Deckenträger (20) Verbindungsabschnitte (106) aufweist, welche zur, insbesondere luft- und partikeldichten, Verbindung des Deckenträgers (20) mit Reinraum-Seitenwandelementen (18) und/oder Reinraum-Zwischenwandelementen (136) ausgebildet sind.

9. Deckenmodul (10) nach einem der vorherigen Ansprüche, wobei jeder Längsträger (36) einen Mittelbereich (42) und zwei Endbereiche (44) aufweist, wobei der Längsträger (36) in den Endbereichen (44) eine geringere Dicke (50) als in dem Mittelbereich (42) aufweist und wobei die Unterseite (48) des Längsträgers (36) in den jeweiligen Endbereichen (44) Anlageabschnitte (54) zur Anlage an ein Tragwerk (12) bildet.

10. System (108), umfassend ein Deckenmodul (10) nach einem der vorherigen Ansprüche und einen Transportrahmen (110), wobei der Transportrahmen (110) und das Deckenmodul (10) derart ausgebildet sind, dass das Deckenmodul (10) zum Transport in dem Transportrahmen (110) halterbar ist.

11. System (108) nach Anspruch 10, wobei der Transportrahmen (110) Anlageabschnitte (116) aufweist, welche dazu ausgebildet sind, in einem Transportzustand des Deckenmoduls (10) an der Unterseite (48) des Modulträgers (30) des Deckenmoduls (10) anzuliegen und in einem Montagezustand des Deckenmoduls (10) an der Oberseite (48) des Modulträgers (30) des Deckenmoduls (10) anzuliegen.

12. System (108) nach einem der Ansprüche 10 oder 11, wobei der Transportrahmen (110) im Wesentlichen U-förmig ausgebildet ist mit einem langen Schenkel (112) und zwei kurzen Schenkeln (114), wobei die freien Enden der kurzen Schenkel (114) die Anlageabschnitte (116) zur Anlage an den Modulträger (30) des Deckenmoduls (10) bilden.

13. System, umfassend ein Deckenmodul (10) nach einem der Ansprüche 1 bis 9 sowie wenigstens ein mit dem Deckenmodul (10) verbindbares oder verbundenes Reinraum-Seitenwandelement (18).

14. System nach Anspruch 13, wobei das wenigstens eine Reinraum-Seitenwandelement (18) wenigstens eines der folgenden zusätzlichen Merkmale aufweist:
a. das wenigstens eine Reinraum-Seitenwandelement (18) weist eine Tür (142) auf;
b. das wenigstens eine Reinraum-Seitenwandelement (18) weist wenigstens ein Fenster (130) auf;
c. das wenigstens eine Reinraum-Seitenwandelement (18) weist wenigstens einen integrierten Fluidkanal für Abluft und/oder wenigstens einen integrierten Kabelkanal für Elektroleitungen auf;
d. das wenigstens eine Reinraum-Seitenwandelement (18) weist wenigstens einen Luftauslass (132) auf, welcher in einem verbundenen Zustand des wenigstens einen Reinraum-Seitenwandelements (18) und des Deckenmoduls (10) an dem Ende des wenigstens einen Reinraum-Seitenwandelements (18) angeordnet ist, welches dem Deckenmodul (10) abgewandt ist;
e. das wenigstens eine Reinraum-Seitenwandelement (18) weist wenigstens eine Durchführeinrichtung (134) zum luft- und partikeldichten Durchführen von Versorgungsleitungen durch das Reinraum-Seitenwandelement (18) auf;
f. das wenigstens eine Reinraum-Seitenwandelement (18) weist ein Brandschutzschicht (124) auf.

## Claims

1. Ceiling module (10) for the construction of a clean room cell (8), comprising:
- a module support (30) for arrangement on and connection to a support structure (12);
- a technical device (34) comprising at least one filter unit (58);
- a ceiling support (20) which is spaced apart from the module support (30) such that a technical space (32) is formed between the ceiling support (20) and the module support (30),
wherein the module support (30), the ceiling support (20) and the technical device (34) are connected to form a unit, and wherein the technical device (34) is arranged inside the technical space (32),
wherein the module support (30) is rectangular and has two longitudinal supports (36) and a plurality of transverse supports (38).

2. Ceiling module (10) according to claim 1, wherein the filter unit (58) is designed as a modular unit with its own module housing (59), wherein the module housing (59) is completely accommodated in the technical space (32) between the module support (30) and the ceiling support (20).

3. Ceiling module according to either of the preceding claims, wherein the filter unit (58) comprises at least one filter means for filtering air and an air conveying means for generating an airflow.

4. Ceiling module (10) according to any of the preceding claims, wherein the technical device (34) also comprises:
- at least one fluid line (60) - for conducting supply air and/or return air for the at least one filter unit (58) - having at least one air connection (62);
- at least one fluidic supply line (68, 70, 76, 78) having at least one fluid connection (72, 74, 80, 82) ;
- at least one electrical supply line (84) having at least one cable connection (90).

5. Ceiling module (10) according to claim 4, wherein the at least one air connection (62), the at least one fluid connection (72, 74, 80, 82) and the at least one cable connection (90) are arranged such that the relevant connection is accessible from an upper side (26) of the ceiling module (10).

6. Ceiling module (10) according to any of the preceding claims, wherein the ceiling support (20) is designed as a frame which delimits a plurality of frame openings (92), wherein the frame openings (92) are each designed for arranging a filter unit (58) or a clean room ceiling panel (102).

7. Ceiling module (10) according to claim 6, wherein a subset of the frame openings (92) is occupied by filter units (58) and the remaining frame openings (92) are occupied by clean room ceiling panels (102), in particular wherein a relevant filter unit (58) and/or a relevant clean room ceiling panel (102) are connected to the ceiling support (20) in an airtight and particle-tight manner.

8. Ceiling module (10) according to claim 6 or claim 7, wherein the ceiling support (20) is formed by mutually perpendicular frame rails (96) which are interconnected by means of connecting elements (100) and/or wherein the ceiling support (20) has connecting portions (106) which are designed for in particular airtight and particle-tight connection of the ceiling support (20) to clean room side wall elements (18) and/or clean room partition wall elements (136).

9. Ceiling module (10) according to any of the preceding claims, wherein each longitudinal support (36) has a central region (42) and two end regions (44), wherein the longitudinal support (36) has a smaller thickness (50) in the end regions (44) than in the central region (42) and wherein the underside (48) of the longitudinal support (36) forms abutment portions (54) in the respective end regions (44) for abutting a support structure (12).

10. System (108) comprising a ceiling module (10) according to any of the preceding claims and a transport frame (110), wherein the transport frame (110) and the ceiling module (10) are designed such that the ceiling module (10) can be held in the transport frame (110) for transport.

11. System (108) according to claim 10, wherein the transport frame (110) has abutment portions (116) which are designed to abut the underside (48) of the module support (30) of the ceiling module (10) in a transport state of the ceiling module (10) and to abut the upper side (48) of the module support (30) of the ceiling module (10) in an installed state of the ceiling module (10).

12. System (108) according to claim 10 or claim 11, wherein the transport frame (110) is substantially U-shaped with one long limb (112) and two short limbs (114), wherein the free ends of the short limbs (114) form the abutment portions (116) for abutting the module support (30) of the ceiling module (10).

13. System comprising a ceiling module (10) according to any of claims 1 to 9 and at least one clean room side wall element (18) that is or can be connected to the ceiling module (10).

14. System according to claim 13, wherein the at least one clean room side wall element (18) has at least one of the following additional features:
a. the at least one clean room side wall element (18) has a door (142);
b. the at least one clean room side wall element (18) has at least one window (130);
c. the at least one clean room side wall element (18) has at least one integrated fluid duct for exhaust air and/or at least one integrated cable duct for electrical cables;
d. the at least one clean room side wall element (18) has at least one air outlet (132) which, in a connected state of the at least one clean room side wall element (18) and the ceiling module (10), is arranged at the end of the at least one clean room side wall element (18) that is remote from the ceiling module (10);
e. the at least one clean room side wall element (18) has at least one feedthrough means (134) for feeding, in an airtight and particle-tight manner, supply lines through the clean room side wall element (18);
f. the at least one clean room side wall element (18) has a fire protection layer (124).

## Revendications

1. Module de plafond (10) pour la construction d'une cellule de salle blanche (8), comprenant:
- un support de module (30) pour la disposition avec et la liaison à une structure de support (12)
- un équipement technique (34) comprenant au moins une unité de filtrage (58);
- un support de plafond (20) qui est espacé du support de module (30) de telle manière qu'un local technique (32) est formé entre le support de plafond (20) et le support de module (30),
dans lequel le support de module (30), le support de plafond (20) et l'équipement technique (34) sont reliés pour former une unité de construction, et dans lequel l'équipement technique (34) est agencé à l'intérieur du local technique (32), dans lequel le support de module (30) est de forme rectangulaire avec deux longerons (36) et une pluralité de traverses (38) .

2. Module de plafond (10) selon la revendication 1, dans lequel l'unité de filtrage (58) est conçue en tant qu'unité modulaire de construction avec un propre boîtier de module (59), dans lequel le boîtier de module (59) est reçu complètement à l'intérieur du local technique (32) entre le support de module (30) et le support de plafond (20).

3. Module de plafond selon l'une quelconque des revendications précédentes, dans lequel l'unité de filtrage (58) comprend au moins un dispositif de filtrage pour filtrer de l'air ainsi qu'un dispositif de transport d'air pour générer un écoulement d'air.

4. Module de plafond (10) selon l'une quelconque des revendications précédentes, dans lequel l'équipement technique (34) comprend en outre:
- au moins une conduite de fluide (60) - pour le conduit d'air amené et/ou d'air de retour pour ladite au moins une unité de filtrage (58) - comprenant au moins un raccord d'air (62);
- au moins une conduite d'alimentation fluidique (68, 70, 76, 78) comprenant au moins un raccord de fluide (72, 74, 80, 82);
- au moins une ligne d'alimentation électrique (84) comprenant au moins un raccord de câble (90).

5. Module de plafond (10) selon la revendication 4, dans lequel ledit au moins un raccord d'air (62), ledit au moins un raccord de fluide (72, 74, 80, 82) et ledit au moins un raccord de câble (90) sont agencés de telle sorte que le raccord respectif est accessible depuis une face supérieure (26) du module de plafond (10).

6. Module de plafond (10) selon l'une quelconque des revendications précédentes, dans lequel le support de plafond (20) est conçu en tant que cadre qui délimite une pluralité d'ouvertures de cadre (92), dans lequel les ouvertures de cadre (92) sont conçues chacune pour l'agencement d'une unité de filtrage (58) ou d'un panneau de plafond de salle blanche (102).

7. Module de plafond (10) selon la revendication 6, dans lequel un sous-ensemble des ouvertures de cadre (92) est occupé par des unités de filtrage (58) et les ouvertures de cadre (92) restantes sont occupées par des panneaux de plafond de salle blanche (102), en particulier dans lequel une unité de filtrage (58) respective et/ou un panneau de plafond de salle blanche (102) respectif sont reliés de manière étanche à l'air et aux particules au support de plafond (20).

8. Module de plafond (10) selon l'une quelconque des revendications 6 ou 7, dans lequel le support de plafond (20) est formé par des rails de cadre (96) qui sont disposés à angle droit les uns par rapport aux autres et qui sont reliés les uns aux autres par des éléments de liaison (100), et/ou dans lequel le support de plafond (20) présente des sections de liaison (106) qui sont conçues pour relier le support de plafond (20) à des éléments de paroi latérale de salle blanche (18) et/ou des éléments de cloison de salle blanche (136), en particulier de manière étanche à l'air et aux particules.

9. Module de plafond (10) selon l'une quelconque des revendications précédentes, dans lequel chaque longeron (36) comprend une zone médiane (42) et deux zones d'extrémité (44), dans lequel le longeron (36) présente une épaisseur (50) plus faible dans les zones d'extrémité (44) que dans la zone médiane (42) et dans lequel la face inférieure (48) du longeron (36) forme des sections d'appui (54) dans les zones d'extrémité (44) respectives pour l'appui sur une structure de support (12).

10. Système (108) comprenant un module de plafond (10) selon l'une quelconque des revendications précédentes et un cadre de transport (110), dans lequel le cadre de transport (110) et le module de plafond (10) sont conçus de telle sorte que, pour le transport, le module de plafond (10) peut être maintenu dans le cadre de transport (110).

11. Système (108) selon la revendication 10, dans lequel le cadre de transport (110) comprend des sections d'appui (116) qui sont conçues pour être en appui sur la face inférieure (48) du support de module (30) du module de plafond (10) dans un état de transport du module de plafond (10), et pour être en appui sur la face supérieure (48) du support de module (30) du module de plafond (10) dans un état de montage du module de plafond (10).

12. Système (108) selon l'une quelconque des revendications 10 ou 11, dans lequel le cadre de transport (110) est pour l'essentiel en forme de U avec une branche longue (112) et deux branches courtes (114), dans lequel les extrémités libres des branches courtes (114) forment les sections d'appui (116) pour l'appui sur le support de module (30) du module de plafond (10).

13. Système comprenant un module de plafond (10) selon l'une quelconque des revendications 1 à 9 ainsi qu'au moins un élément de paroi latérale de salle blanche (18) qui peut être ou est relié au module de plafond (10) .

14. Système selon la revendication 13, dans lequel ledit au moins un élément de paroi latérale de salle blanche (18) présente au moins l'une des caractéristiques supplémentaires suivantes:
a. ledit au moins un élément de paroi latérale de salle blanche (18) présente une porte (142);
b. ledit au moins un élément de paroi latérale de salle blanche (18) présente au moins une fenêtre (130);
c. ledit au moins un élément de paroi latérale de salle blanche (18) présente au moins un conduit de fluide intégré pour de l'air évacué et/ou au moins un conduit de câble intégré pour des lignes électriques;
d. ledit au moins un élément de paroi latérale de salle blanche (18) présente au moins une sortie d'air (132) qui, lorsque ledit au moins un élément de paroi latérale de salle blanche (18) et le module de plafond (10) sont reliés, est disposé à l'extrémité dudit au moins un élément de paroi latérale de salle blanche (18), qui montre dans la direction opposée au module de plafond (10),
e. ledit au moins un élément de paroi latérale de salle blanche (18) présente au moins un dispositif de traversée (134) pour faire passer de manière étanche à l'air et aux particules des conduites d'alimentation à travers l'élément de paroi latérale de salle blanche (18);
f. ledit au moins un élément de paroi latérale de salle blanche (18) présente une couche de protection contre le feu (124).
